# FASCICULE DE BREVET EUROPEEN

(11) **EP 1 199 243 B1**
(45) Date de publication et mention de la délivrance du brevet: **14.06.2006**
(21) Numéro de dépôt: 01402633.0
(22) Date de dépôt: 11.10.2001
(51) Int. Cl.: B62D 1/10

(54) **Système et volant de direction pour véhicule**
Lenksystem und -rad für ein Fahrzeug
Steering system and wheel for a vehicle

(30) Priorité: 18.10.2000 FR 0013343
(43) Date de publication de la demande: 24.04.2002
(73) Titulaire: AUTOLIV DEVELOPMENT AB, 107 24 Stockholm (SE)
(72) Inventeur: Groleau, Laurent, 86190 Latille (FR); Chapelain, Etienne, 86440 Migne-Auxances (FR)
(74) Mandataire: Santarelli

(56) Documents cités:
- EP-A- 0 414 245
- FR-A- 1 440 124

## Description

L'invention a trait aux volants de direction pour véhicule et plus généralement aux systèmes de direction pour véhicule dont le volant entoure un support fixe permettant par exemple de disposer au centre du volant un module coussin gonflable (en anglais : airbag).

Du fait qu'il reste fixe, un tel module coussin gonflable permet d'offrir une meilleure protection du conducteur en cas d'accident puisque, étant donné que sa position reste toujours la même par rapport au conducteur, indépendamment de la position du volant, la forme déployée du coussin gonflable n'a pas à être axisymétrique et peut donc être optimisée par rapport au conducteur.

En outre, un tel support fixe offre également l'avantage de pouvoir se passer de contacteur électrique tournant, les câbles étant directement reliés au coussin gonflable et aux commandes situées sur le module fixe.

On a déjà proposé diverses solutions pour permettre au support qu'entoure le volant de rester fixe, y compris dans le cas où ce support doit être solidarisé à un élément de bâti situé à l'extérieur de la colonne de direction, ce qui impose de passer d'une configuration où la partie tournante (la colonne de direction) est à l'intérieur de la partie fixe (l'élément de bâti) à une configuration où la partie tournante (le volant) est à l'extérieur de la partie fixe (le support).

En particulier, la demande de brevet européen 0 825 089 décrit un système comportant :
- un volant dont le moyeu présente des moyens pour être guidé à rotation, sur un élément fixe, coaxialement à la colonne de direction, et présente un pignon à denture externe, également coaxial à la colonne de direction ;
- un second pignon à denture externe solidarisé coaxialement à la colonne de direction ; et
- un manchon comportant deux couronnes à denture interne identiques mais décalées axialement, respectivement prévues pour engrener avec le pignon du volant et avec le pignon de la colonne de direction, l'axe de rotation du manchon étant décalé par rapport à l'axe de rotation de la colonne et du volant de sorte qu'il existe entre le manchon et les pignons un espace en forme de croissant permettant le passage de l'élément fixe servant à guider en rotation le volant et à recevoir le support fixe et permettant également le passage des câbles électriques.

On connaît également, par le brevet américain 4,808,146, un système comportant :
- un volant solidarisé classiquement à la colonne de direction ;
- un premier pignon, situé du côté de la colonne de direction, solidarisé à un élément de bâti extérieur à la colonne ;
- un second pignon, monté à rotation sur le volant à l'opposé de la colonne de direction ; et
- une courroie s'enroulant autour d'au moins deux tourillons portés par le volant, s'engrenant à la fois avec le premier pignon et avec le second pignon, qui sont identiques, de sorte que l'entraînement de la courroie provoqué par la rotation du volant du fait de la coopération entre le premier pignon et la courroie est exactement adapté à entraîner le second pignon par rapport au volant pour qu'il garde la même position par rapport au premier pignon, et donc par rapport au bâti ; et
- un support fixe solidarisé au second pignon.

On connaît encore, notamment par la demande de brevet européen 0 414 245, un système de direction pour véhicule, à volant entourant un support fixe, ledit système comportant un pignon à denture externe solidaire coaxialement d'une colonne de direction et comportant une couronne à denture interne engrenant avec ledit pignon, ladite couronne étant solidaire dudit volant, l'axe de rotation de la couronne étant décalé par rapport à l'axe de rotation du pignon de sorte qu'il existe entre le pignon et la couronne un espace en forme de croissant permettant le passage de moyens de solidarisation entre ledit support fixe et un élément de bâti situé à l'extérieur de ladite colonne.

Du fait que la couronne est solidaire du volant, ce système ne nécessite qu'un seul couple d'engrenages (le pignon et la couronne) et non deux pignons coopérant avec un même manchon ou une même courroie comme dans les systèmes antérieurs susmentionnés.

L'invention vise à fournir un tel système de direction de façon simple, commode et économique.

L'invention propose à cet effet, sous un premier aspect, un procédé pour monter un système de direction pour véhicule, à volant entourant un support fixe, ledit système comportant un pignon à denture externe solidaire coaxialement d'une colonne de direction et comportant une couronne à denture interne engrenant avec ledit pignon, ladite couronne étant solidaire dudit volant, l'axe de rotation de la couronne étant décalé par rapport à l'axe de rotation du pignon de sorte qu'il existe entre le pignon et la couronne un espace en forme de croissant permettant le passage de moyens de solidarisation entre ledit support fixe et un élément de bâti situé à l'extérieur de ladite colonne ; procédé caractérisé en ce qu'il comporte :
- l'étape de fournir sous la forme d'une unité préassemblée, un ensemble adapté à être mis en place sur ladite colonne et sur ledit élément de bâti, ladite unité préassemblée comportant ledit volant muni de ladite couronne, ledit support fixe, ledit pignon qui est adapté à être solidarisé à ladite colonne, un embout fixe muni de moyens d'immobilisation vis-à-vis dudit élément de bâti, des moyens de montage à rotation prévus entre ledit embout et ledit volant, et des moyens d'assujettissement prévus entre ledit embout et ledit support fixe ; et
- les étapes d'engager ledit pignon de ladite unité préassemblée sur ladite colonne, d'engager lesdits moyens d'immobilisation en rotation dudit embout sur ledit élément de bâti et de serrer une vis de verrouillage dudit pignon sur ladite colonne.

On voit qu'avec l'invention, le montage du système de direction ne nécessite que le serrage de la vis de verrouillage du pignon sur la colonne, bien entendu après engagement du pignon sur la colonne et engagement des moyens d'immobilisation en rotation de l'embout sur l'élément de bâti.

L'invention vise également, sous un deuxième aspect, une unité préassemblée convenant à la mise en oeuvre du procédé qui vient d'être exposé.

L'exposé de l'invention sera maintenant poursuivi par la description de deux modes de réalisation d'un système de direction pour véhicule, donnée ci-après à titre d'exemples illustratifs et non limitatifs, en référence aux dessins annexés.

Sur ceux-ci :
- la figure 1 est une vue en perspective-coupe d'un premier mode de réalisation d'un système de direction, utile à l'intelligence de l'invention ;
- la figure 2 est un agrandissement de la partie centrale de la figure 1 ;
- les figures 3 et 4 sont les vues en coupe suivant les plans repérés respectivement par III-III et IV-IV sur la figure 2 ;
- la figure 5 est une vue en coupe, effectuée selon le même plan que sur la figure 1, dans un deuxième mode de réalisation d'un système de direction, obtenu à partir d'une unité préassemblée conforme à l'invention, le module coussin gonflable n'étant pas illustré ; et
- les figures 6 et 7 sont des vues similaires à la figure 5, montrant des variantes de ce mode de réalisation pour les moyens d'immobilisation en rotation vis-à-vis de la gaine de colonne.

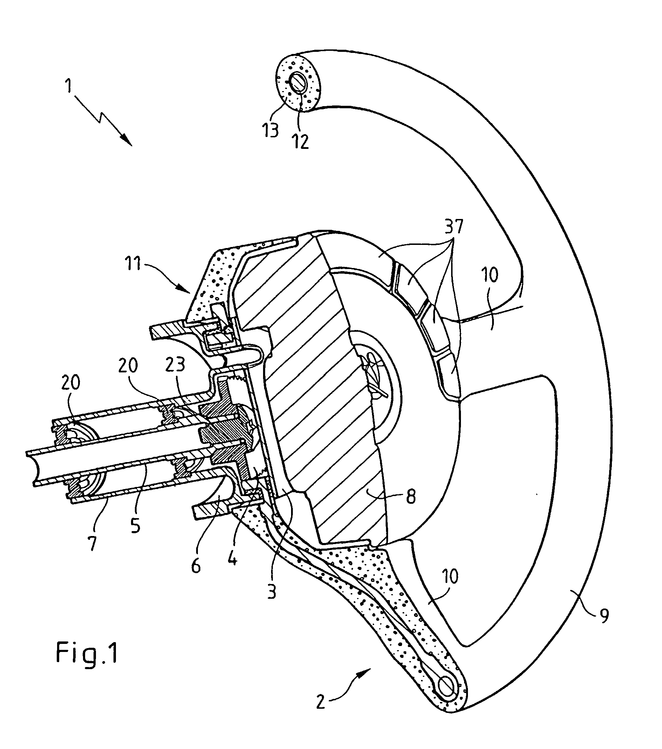

Le système de direction 1 montré sur les figures 1 à 4 comporte un volant 2, un support fixe 3 entouré par le volant 2, un pignon 4 à denture externe solidarisé coaxialement à la colonne de direction 5 et un embout 6 de montage du volant 2 et du support 3, l'embout 6 étant ici directement solidaire de l'élément de bâti tubulaire 7, généralement appelé gaine de colonne, situé autour de la colonne 5 et qui sert à son montage à rotation. Un module coussin gonflable 8 est assujetti au support fixe 3 de sorte que ce module est lui aussi fixe et entouré par le volant 2.

Ce dernier comporte une jante 9 reliée par des branches 10, ici au nombre de trois, à un moyeu 11 coopérant, d'une part, avec l'embout 6, sur lequel il est monté à rotation, et, d'autre part, avec le pignon 4, afin d'entraîner en rotation la colonne de direction 5.

Le volant 2 est classiquement formé par une armature métallique 12 et par un enrobage 13 dans lequel est noyée l'armature métallique.

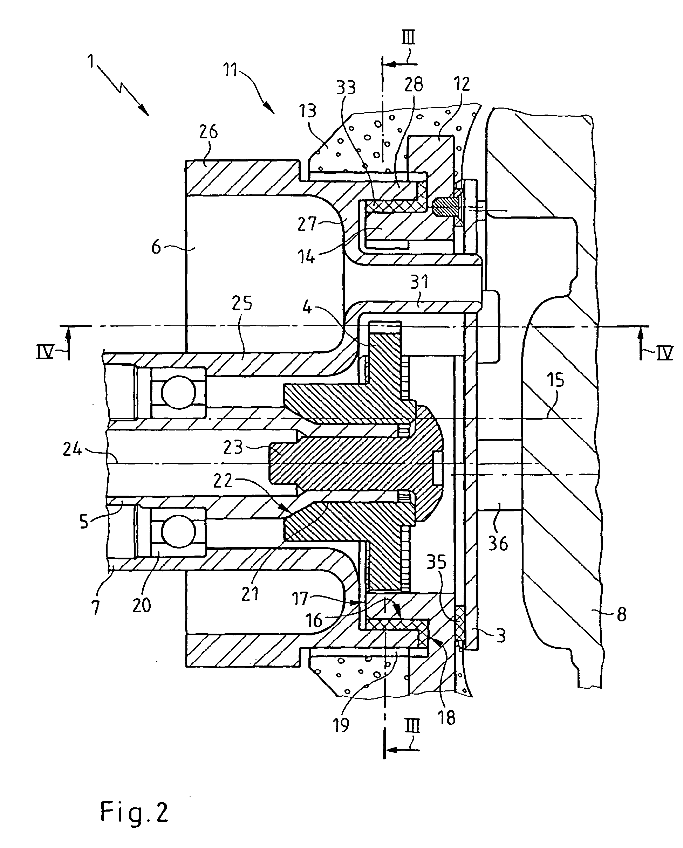

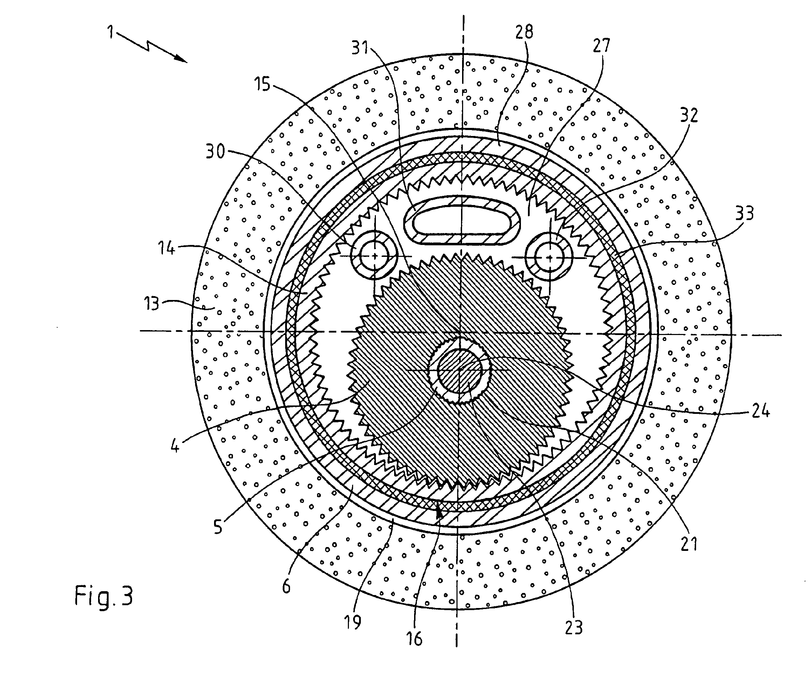

Comme on le voit plus particulièrement sur les figures 2 et 3, la partie centrale du moyeu 11, directement formée par l'armature métallique 12, constitue une couronne 14 à denture interne centrée sur l'axe 15 du volant 2, la couronne 14 ayant plus précisément, en section radiale, une forme en L de sorte qu'elle présente, du côté interne, une surface cylindrique ayant une certaine extension axiale, de laquelle saille, du côté que l'on voit à gauche sur la figure 2, la denture interne.

A l'opposé de cette dernière, la couronne 14 présente une surface externe cylindrique 16 centrée sur l'axe 15, s'étendant de la tranche 17 de la couronne 14, située à l'opposé de la jante 9, jusqu'à la surface de fond 18 d'une gorge 19 que présente le moyeu 11 autour de la couronne 14.

La colonne de direction 5 est classiquement montée à rotation dans la gaine 7 grâce à des roulements à billes 20. Sa partie terminale présente classiquement, du côté externe, à partir de sa tranche, une zone cannelée 21 (cannelures visibles sur la figure 3) puis une surface de butée axiale tronconique 22 tandis que du côté interne, la partie terminale présente un trou taraudé. Le pignon 4 est monté sur la partie terminale de la colonne 5 de la même façon qu'est classiquement monté le moyeu d'un volant conventionnel, l'alésage du pignon 4 présentant des cannelures et une surface de butée tronconique propre à procurer respectivement l'immobilisation en rotation et l'immobilisation axiale, le verrouillage du pignon 4 s'effectuant grâce à une vis 23 dont la tige filetée coopère avec le trou taraudé de la colonne 5 alors que sa tête prend appui sur le pignon 4.

Bien entendu lorsque le montage est effectué, le pignon 4 est centré sur le même axe 24 que la colonne 5 et la gaine 7.

L'embout 6, qui est ici solidaire de la gaine de colonne 7, comporte d'une façon générale deux parties tubulaires 25 et 26 réunies à une extrémité par une paroi transversale 27. La partie 25 se raccorde à la gaine de colonne 7 du côté que l'on voit à gauche sur les figures 1 et 2 et prolonge cette gaine jusqu'à la paroi 27 en entourant la colonne 5 et la partie à petit diamètre du pignon 4. Alors que la partie 25 est centrée sur l'axe 24, la partie 26 est centrée sur l'axe 15, c'est-à-dire sur l'axe de rotation du volant 2, et donc de la couronne

A la périphérie de la paroi 27, du côté opposé à la partie 26, s'élève une autre partie tubulaire 28, dont la surface interne cylindrique est de diamètre légèrement plus grand que la surface 16 de la couronne 14.

Dans la partie la plus large de la surface 27, c'est-à-dire là où l'espace entre les parties 25 et 26 est le plus grand, qui est situé en haut sur les figures 1 à 3, s'élèvent de la paroi 27 trois conduits 30, 31 et 32 entourant chacun un orifice ménagé dans la paroi 27, de sorte que la paroi 27 et chacun des conduits 30, 31 et 32 délimitent un passage débouchant à ses deux extrémités. Les conduits 30 et 32 sont taraudés afin qu'ils puissent recevoir une vis.

Le conduit 31 présente une section oblongue et sa paroi intérieure est lisse.

Le volant 2 est monté à rotation sur l'embout 6 grâce notamment à la coopération de la partie tubulaire 28 de cet embout et de la couronne 14 du moyeu 11, un palier 33 anti-friction annulaire à section en L étant interposé entre ces éléments de sorte qu'il est en contact avec les surfaces 16 et 18 de la couronne 14, ce qui procure au volant un guidage en rotation et un appui axial dans le sens du rapprochement entre le volant 2 et l'embout 6.

Comme on le voit plus particulièrement sur la figure 3, lorsque le volant 2, et plus précisément son moyeu 11, est en place sur l'embout 6, la denture interne de la couronne 14 engrène avec la denture externe du pignon 4 de sorte qu'il existe une liaison en rotation entre la colonne 5 et le volant 2.

L'espace en forme de croissant existant entre le pignon 4 et la couronne 14 du fait du décalage entre les axes 15 et 24, conserve toujours le même emplacement, de sorte que les conduits 30, 31 et 32, qui y sont disposés, ne gênent pas la rotation du volant.

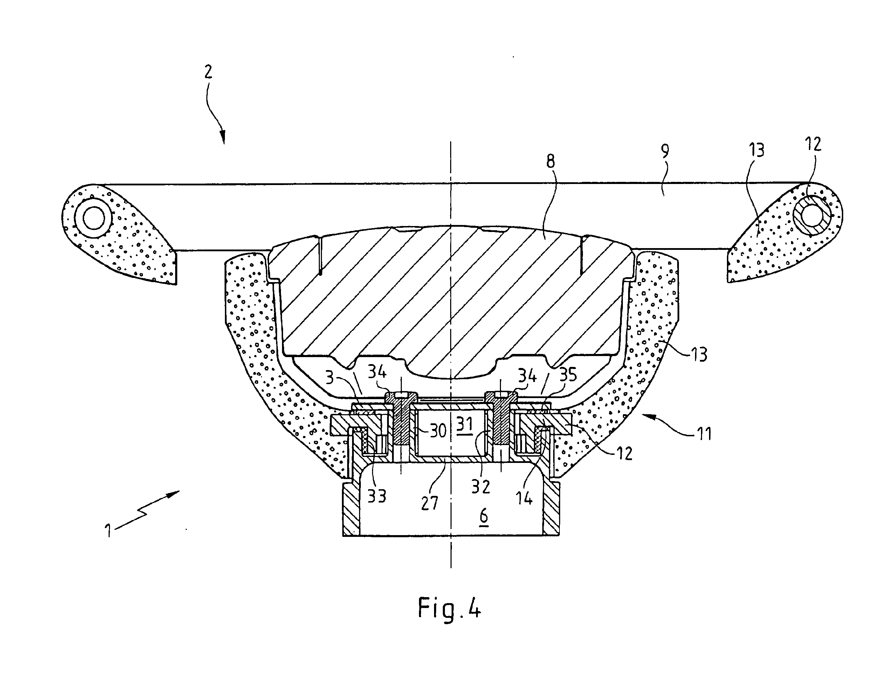

Le support fixe 3, ainsi qu'on le voit plus particulièrement sur la figure 4, est assujetti à l'embout 6 grâce aux conduits 30 et 32, sur la tranche desquels il prend appui, l'immobilisation étant assurée par des vis 34 dont la tige coopère avec le filetage de ces conduits.

Ainsi qu'on le voit sur la figure 2, le conduit 31 est plus long que les conduits 30 et 32 et son extrémité est reçue dans une lumière de même contour que présente le support 3.

Celui-ci se présente d'une façon générale sous la forme d'une plaque circulaire et c'est la périphérie de ce support qui procure l'immobilisation axiale du volant 2 dans le sens où ce dernier s'écarte de l'embout 6, cette périphérie recouvrant le centre du moyeu 11 du côté de la jante 9. Une rondelle anti-friction 35, immobilisée par vis sur l'armature 12 du volant, est interposée entre cette armature et le support 3.

Le module coussin gonflable 8 est assujetti au support fixe 3 grâce à des pattes d'accrochage 36 (figure 2) dont est munie sa base, ici des pattes d'encliquetage sur un anneau métallique retenu sur le support 3.

Ainsi, le module 8 est rendu solidaire de la gaine de colonne 7 par l'intermédiaire, respectivement, du support fixe 3, des vis 34 et de l'embout 6.

Le module 8 reste donc fixe au centre du volant 9, qui pivote autour de ce module.

En outre de ses composants coussin gonflable proprement dit, ce module présente également des touches 37 de commande de certains accessoires électriques du véhicule, tels que l'avertisseur. Les câbles électriques auxquels doit être relié le module 8, tant pour le fonctionnement de sa partie coussin gonflable que pour les touches 37, passent à l'intérieur du conduit 31.

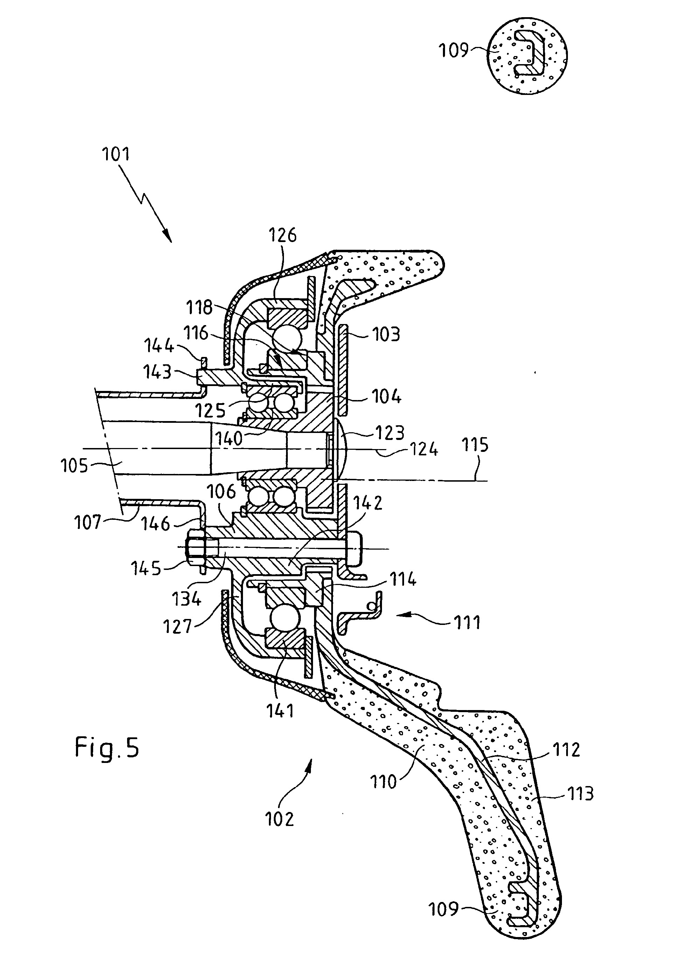

On va maintenant décrire le système de direction illustré sur la figure 5. On a employé, pour les éléments similaires, les mêmes références que ci-dessus mais additionnées du chiffre 100.

Le système 101 illustré sur la figure 5 se distingue du système 1 essentiellement par le fait que l'embout 106 n'est pas solidaire de la gaine de colonne 107, mais est simplement immobilisé en rotation par rapport à celle-ci.

Les deux parties tubulaires 125 et 126 de l'embout 106, centrées respectivement sur l'axe 124 de la colonne 105 et sur l'axe 115 du volant sont reliées par une paroi 127 qui n'est pas située du côté de la jante 109 du volant, mais du côté du moyeu 111. Un montage complet à rotation, faisant intervenir un roulement à billes 140, est prévu entre le pignon 104 et la partie tubulaire 125, de sorte que l'embout 106 est non seulement guidé à rotation autour du pignon 104 (et donc, lorsque le système est monté, autour de l'axe 124), mais également immobilisé axialement, dans les deux sens, par rapport au pignon 104.

Le montage à rotation du volant 102 sur l'embout 106 s'effectue, de même, d'une façon complète, grâce à un montage faisant intervenir un roulement à billes 141 entre la couronne 114 et la paroi tubulaire 126.

L'espace en forme de croissant entre la couronne 114 et le pignon 104 n'est pas situé en haut comme dans le premier mode de réalisation, mais en bas.

Le support fixe 103 n'intervient pas dans le montage à rotation du volant 102 sur l'embout 106, le montage complet s'opérant dans la zone du roulement 141.

Au lieu d'avoir un unique conduit 31 de forme oblongue, l'embout 106 présente deux conduits allongés situés de part et d'autre d'un conduit supplémentaire 142 qui sert au passage d'une troisième vis 134 d'assujettissement du support fixe 103.

L'immobilisation en rotation de l'embout 106 par rapport à la gaine de colonne 107 se fait grâce à un pion 143 logé dans un orifice correspondant d'une patte recourbée 144 située à l'extrémité de la gaine 107 et grâce à l'engagement de l'extrémité de la vis 134 visible sur le dessin (vis centrale) dans un écrou 145 rapporté sur une autre patte radiale recourbée de la gaine 107.

On observera que le montage du système de direction 101 sur l'ensemble formé par la colonne 105 et par la gaine 107, ne nécessite que le serrage de la vis 123 et de la vis 134 visibles sur la figure 5, bien entendu après engagement du pignon 104 sur la partie terminale de la colonne 105 et du pion 143 dans l'orifice de la patte recourbée 144 (l'ensemble qui se met en place sur la colonne 105 et sur la gaine 107 forme une unité préassemblée).

On observera également que le système 101 est particulièrement compact de sorte qu'il peut être installé à la place d'un volant conventionnel dont le module coussin gonflable est directement assujetti au moyeu du volant, à condition bien entendu de prévoir les pattes 144 et 146 sur l'embout de gaine 107.

On observera également que la présence de ces pattes recourbées n'empêche pas le montage, si on le désire, d'un volant conventionnel à module central assujetti au moyeu.

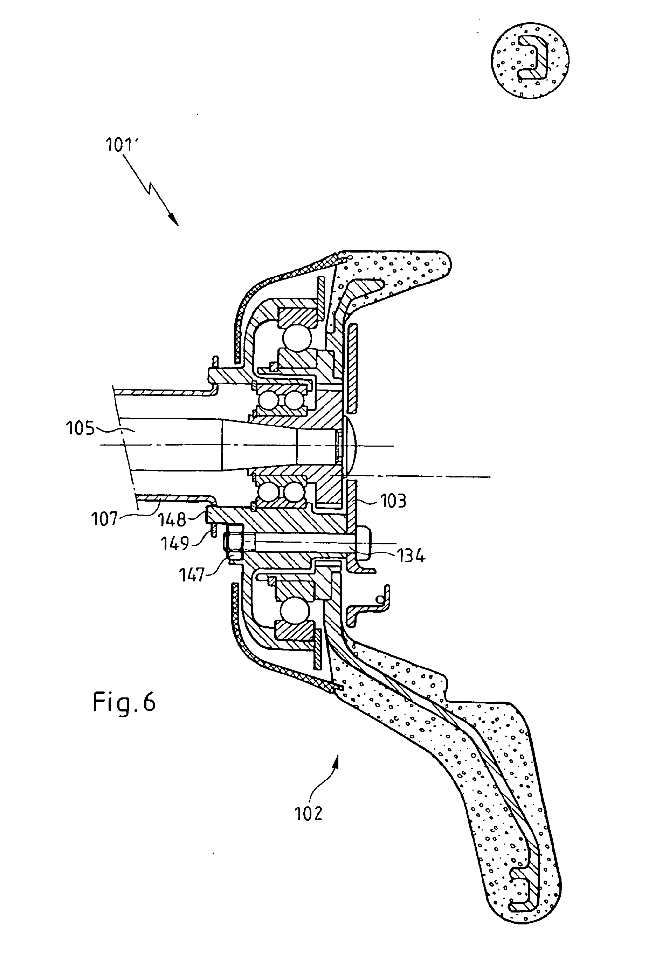

Le système 101' illustré sur la figure 6 est similaire au système 101, si ce n'est que la vis 134 visible sur cette figure coopère avec un écrou 147 faisant partie de l'embout 106, l'immobilisation en rotation entre la gaine 107 et l'embout 106 se faisant grâce à un pion 148 similaire au pion 143 engagé dans une patte recourbée 149 similaire à la patte 144.

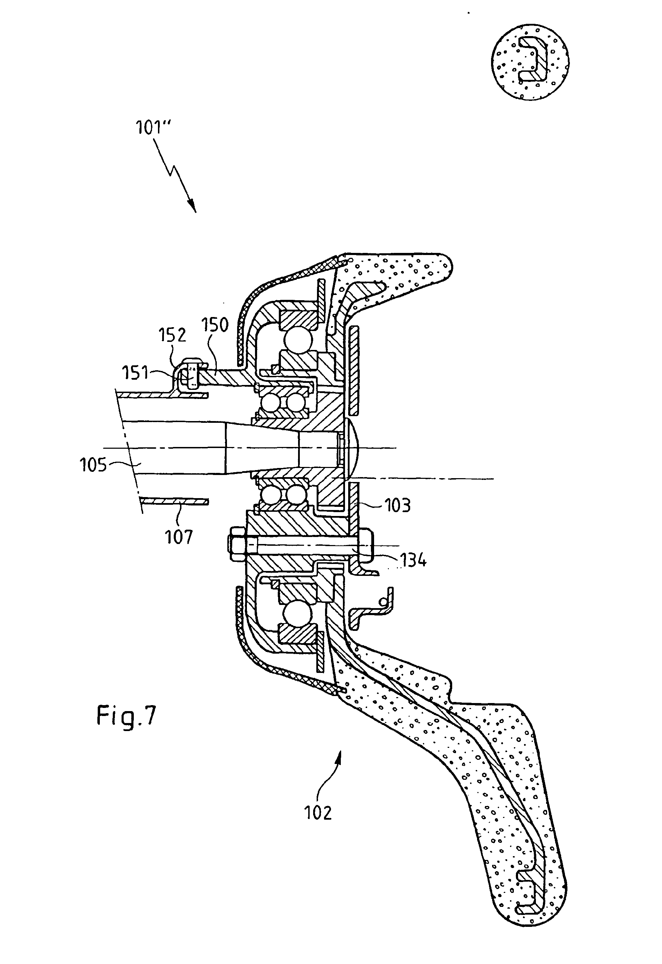

Le système 101" montré sur la figure 7 est lui aussi similaire au système 101, si ce n'est que l'immobilisation en rotation de l'embout 106 se fait grâce à une patte 150 de cet embout immobilisé grâce à une vis radiale 151 coopérant avec une console 152 faisant partie de la gaine 107.

Dans une variante non illustrée, le module assujetti au support fixe 3 ou 103 n'est pas un module coussin gonflable mais est d'un autre type, notamment choc-tête ; ou bien aucun module de sécurité n'est assujetti au support fixe, celui-ci ne portant que des commandes électriques.

Dans d'autres variantes non-illustrées, le couvercle du module airbag est séparé de ce module et est assujetti au volant, de sorte que seule la partie coussin gonflable proprement dite reste fixe.

De nombreuses autres variantes sont possibles en fonction des circonstances et on rappelle à cet égard que l'invention ne se limite pas aux exemples décrits et représentés.

## Revendications

1. Procédé pour monter un système de direction pour véhicule, à volant entourant un support fixe (103), ledit système comportant un pignon (104) à denture externe solidaire coaxialement d'une colonne de direction (105) et comportant une couronne (114) à denture interne engrenant avec ledit pignon (104), ladite couronne (114) étant solidaire dudit volant (102), l'axe de rotation (115) de la couronne étant décalé par rapport à l'axe de rotation (124) du pignon de sorte qu'il existe entre le pignon et la couronne un espace en forme de croissant permettant le passage de moyens de solidarisation (106, 134) entre ledit support fixe (103) et un élément de bâti (107) situé à l'extérieur de ladite colonne (105) ; procédé **caractérisé en ce qu'**il comporte :
- l'étape de fournir sous la forme d'une unité préassemblée, un ensemble adapté à être mis en place sur ladite colonne (105) et sur ledit élément de bâti (107), ladite unité préassemblée comportant ledit volant (102) muni de ladite couronne (114), ledit support fixe (103), ledit pignon (104) qui est adapté à être solidarisé à ladite colonne (105), un embout fixe (106) muni de moyens d'immobilisation (143, 134 ; 143, 148 ; 150) vis-à-vis dudit élément de bâti (107), des moyens (141) de montage à rotation prévus entre ledit embout (106) et ledit volant (102), et des moyens (134) d'assujettissement prévus entre ledit embout (106) et ledit support fixe (103) ; et
- les étapes d'engager ledit pignon (104) de ladite unité préassemblée sur ladite colonne (105), d'engager lesdits moyens (143, 134 ; 143, 148 ; 150) d'immobilisation en rotation dudit embout (106) sur ledit élément de bâti (107) et de serrer une vis (123) de verrouillage dudit pignon (104) sur ladite colonne (105).

2. Procédé selon la revendication 1, **caractérisé en ce qu'**il comporte l'étape de prévoir, dans ladite unité préassemblée, des moyens de montage à rotation (140) entre ledit pignon (104) et ledit embout (106).

3. Procédé selon l'une quelconque des revendications 1 ou 2, **caractérisé en ce qu'**il comporte l'étape de prévoir que lesdits moyens d'immobilisation en rotation vis-à-vis de l'élément de bâti (107) comportent au moins un pion (143, 148) adapté à être reçu dans une patte recourbée (144, 149) dudit élément de bâti (107).

4. Procédé selon la revendication 3, **caractérisé en ce qu'**il comporte l'étape de prévoir que lesdits moyens d'immobilisation en rotation vis-à-vis de l'élément de bâti (107) comportent exclusivement des pions (143, 148) adaptés à être reçus dans une patte recourbée (144, 149) dudit élément de bâti (107).

5. Procédé selon l'une quelconque des revendications 1 à 3, **caractérisé en ce qu'**il comporte l'étape de prévoir que lesdits moyens d'immobilisation en rotation vis-à-vis dudit élément de bâti (107) comportent au moins une vis (134 ; 151).

6. Procédé selon l'une quelconque des revendications 1 à 5, **caractérisé en ce qu'**il comporte l'étape de prévoir que ledit embout (106) présente, dans ledit espace en forme de croissant existant entre ledit pignon (104) et ladite couronne (114), au moins un conduit (31) de passage de câbles électriques.

7. Procédé selon l'une quelconque des revendications 1 à 6, **caractérisé en ce qu'**il comporte l'étape de prévoir que ledit élément de bâti est la gaine tubulaire (7 ; 107) servant au montage à rotation de ladite colonne (5 ; 105).

8. Procédé selon l'une quelconque des revendications 1 à 7, **caractérisé en ce qu'**il comporte l'étape de prévoir que ledit pignon (104) est adapté à être solidarisé à une colonne (105) dont la partie terminale présente, du côté externe, à partir de sa tranche, une zone cannelée (21) puis une surface de butée axiale tronconique (22).

9. Procédé selon l'une quelconque des revendications 1 à 8, **caractérisé en ce qu'**il comporte l'étape de prévoir que ledit embout (106) comporte deux parties tubulaires (125, 126) centrées respectivement sur l'axe de rotation (124) du pignon (104) et sur l'axe de rotation (115) de la couronne (114), et une paroi (127) orientée transversalement qui relie lesdites deux parties (125, 126).

10. Unité préassemblée de direction pour véhicule, convenant à la mise en oeuvre du procédé selon l'une quelconque des revendications 1 à 9, **caractérisée en ce qu'**elle comporte :
- un support fixe (103) ;
- un volant (102) entourant ledit support fixe (103) ;
- un pignon (104) à denture externe destiné à être solidarisé coaxialement à une colonne de direction (105) ;
- une couronne (114) à denture interne prévue pour engrener avec ledit pignon (104), ladite couronne (114) étant solidaire dudit volant (102), l'axe de rotation (115) de la couronne étant décalé par rapport à l'axe de rotation (124) du pignon de sorte qu'il existe entre le pignon et la couronne un espace en forme de croissant ;
- des moyens de solidarisation (106, 134) entre ledit support fixe (103) et un élément de bâti (107) situé à l'extérieur de ladite colonne (105), ledit espace en forme de croissant permettant le passage desdits moyens de solidarisation ;
- un embout fixe (106) muni de moyens d'immobilisation en rotation (143, 134 ; 143, 148 ; 150) vis-à-vis dudit élément de bâti (107) ; et
- des moyens (141) de montage à rotation prévus entre ledit embout (106) et ledit volant (102).

11. Unité selon la revendication 10, **caractérisée en ce que** des moyens de montage à rotation (140) sont prévus entre ledit pignon (104) et ledit embout (106).

12. Unité selon l'une quelconque des revendications 10 ou 11, **caractérisée en ce que** lesdits moyens d'immobilisation en rotation vis-à-vis de l'élément de bâti (107) comportent au moins un pion (143, 148) adapté à être reçu dans une patte recourbée (144, 149) dudit élément de bâti (107).

13. Unité selon la revendication 12, **caractérisée en ce que** lesdits moyens d'immobilisation en rotation vis-à-vis de l'élément de bâti (107) comportent exclusivement des pions (143, 148) adaptés à être reçus dans une patte recourbée (144, 149) dudit élément de bâti (107).

14. Unité selon l'une quelconque des revendications 10 à 12, **caractérisée en ce que** lesdits moyens d'immobilisation en rotation vis-à-vis dudit élément de bâti (107) comportent au moins une vis (134 ; 151).

15. Unité selon l'une quelconque des revendications 10 à 14, **caractérisée en ce que** ledit embout (106) présente, dans ledit espace en forme de croissant existant entre ledit pignon (104) et ladite couronne (114), au moins un conduit (31) de passage de câbles électriques.

16. Unité selon l'une quelconque des revendications 10 à 15, **caractérisée en ce que** ledit pignon (104) est adapté à être solidarisé à une colonne (105) dont la partie terminale présente, du côté externe, à partir de sa tranche, une zone cannelée (21) puis une surface de butée axiale tronconique (22).

17. Unité selon l'une quelconque des revendications 10 à 16, **caractérisée en ce que** ledit embout (106) comporte deux parties tubulaires (125, 126), centrées respectivement sur l'axe de rotation (124) du pignon (104) et sur l'axe de rotation (115) de la couronne (114), et une paroi (127) orientée transversalement qui relie lesdites deux parties (125, 126).

18. Unité selon l'une quelconque des revendications 10 à 17, **caractérisée en ce que** ledit volant (102) comporte une jante (109), un moyeu (111) et des branches (110) reliant ledit moyeu et ladite jante, ledit moyeu (111) comportant une partie centrale constituant ladite couronne (114).

19. Unité selon la revendication 18, **caractérisée en ce que** ladite couronne (114) présente, en section radiale, une forme en L.

20. Unité selon l'une quelconque des revendications 18 ou 19, **caractérisée en ce que** ledit volant comporte un moyeu (111) présentant une gorge (19) autour de ladite couronne (14 ; 114).

## Claims

1. Method for mounting a steering system for a vehicle, with a steering wheel surrounding a fixed support (103), the said system comprising a pinion (104) with external teeth fixed coaxially to a steering column (105) and comprising a ring (114) with internal teeth meshing with the said pinion (104), the said ring (114) being fixed to the said steering wheel (102), the rotation axis (115) of the ring being offset with respect to the rotation axis (124) of the pinion so that there exists between the pinion and the ring a space in the form of a crescent allowing the passage of connection means (106, 134) between the said fixed support (103) and a frame element (107) situated outside the said column; a method **characterised in that** it comprises:
- the step of supplying, in the form of a preassembled unit, an assembly adapted to be fitted on the said column (105) and on the said frame element (107), the said preassembled unit comprising the said steering wheel (102) provided with the said ring (114), the said fixed support (103), the said pinion (104) which is adapted to be connected to the said column (105), a fixed connecting piece (106) provided with immobilisation means (143, 134; 143, 148; 150) vis-à-vis the said frame element (107), means (141) for rotational mounting provided between the said connecting piece (106) and the said steering wheel (102), and securing means (134) provided between the said connecting piece (106) and the said fixed support (103); and
- the steps of engaging the said pinion (104) of the said preassembled unit on the said column (105), engaging the said means (143, 134; 143, 148; 150) of rotationally immobilising the said connecting piece (106) on the said frame element (107) and tightening a screw (123) for locking the said pinion (104) on the said column (105).

2. Method according to claim 1, **characterised in that** it comprises the step of providing, in the said preassembled unit, means for rotational mounting (140) between the said pinion (104) and the said connecting piece (106).

3. Method according to either one of claims 1 or 2, **characterised in that** it comprises the step of providing for the said means of rotational immobilisation vis-à-vis the frame element (107) to comprise at least one stud (143, 148) adapted to be received in a curved lug (144, 149) on the said frame element.

4. Method according to claim 3, **characterised in that** it comprises the step of providing for the said means of rotational immobilisation vis-à-vis the frame element (107) to comprise exclusively studs (143, 148) adapted to be received in a curved lug (144, 149) on the said frame element (107).

5. Method according to any one of claims 1 to 3, **characterised in that** it comprises a step of providing for the said means of rotational immobilisation vis-à-vis the said frame element (107) to comprise at least one screw (134; 151).

6. Method according to any one of claims 1 to 5, **characterised in that** it comprises the step of providing for the said connecting piece (106) to have, in the said crescent-shaped space existing between the said pinion (104) and the said ring (114), at least one conduit (31) for the passage of electric cables.

7. Method according to any one of claims 1 to 6, **characterised in that** it comprises the step of providing for the said frame element to be the tubular sheath (7; 107) serving for the rotational mounting of the said column (5; 105) .

8. Method according to any one of claims 1 to 7, **characterised in that** it comprises the step of providing for the said pinion (104) to be adapted to be connected to a column (105), the end part of which has, on the external side, as from its edge, a fluted zone (21) and then a frustoconical axial stop surface (22).

9. Method according to any one of claims 1 to 8, **characterised in that** it comprises the step of providing for the said connecting piece (106) to comprise two tubular parts (125, 126) centred respectively on the rotation axis (124) of the pinion (104) and on the rotation axis (115) of the ring (114), and a transversely oriented wall (127) that connects the said two parts (125, 126).

10. Preassembled steering unit for vehicles, and suitable for implementing the method according to any one of claims 1 to 9, **characterised in that** it comprises:
- a fixed support (103);
- a steering wheel (102) surrounding the said fixed support (103);
- a pinion (104) with external teeth intended to be fixed coaxially to a steering column (105);
- a ring (114) with internal teeth designed to mesh with the said pinion (104), the said ring (114) being fixed to the said steering wheel (102), the rotation axis (115) of the ring being offset with respect to the rotation axis (123) of the pinion so that there exists between the pinion and the ring a space in the form of a crescent;
- connection means (106, 134) between the said fixed support (103) and a frame element (107) situated outside the said column (105), and the said crescent-shaped space allowing passage of the said connection means;
- a fixed connecting piece (106) provided with means for rotational immobilisation (143, 134; 143, 148; 150) vis-à-vis the said frame element (107); and
- means (141) for mounting for rotation provided between the said connecting piece (106) and the said steering wheel (102).

11. Unit according to claim 10, **characterised in that** means (140) for mounting in rotation are provided between the said pinion (104) and the said connecting piece (106).

12. Unit according to either one of claims 10 or 11, **characterised in that** the said means of rotational immobilisation vis-à-vis the frame element (107) comprise at least one stud (143, 148) adapted to be received in a curved lug (144, 149) on the said frame element (107).

13. Unit according to claim 12, **characterised in that** the said means of rotational immobilisation vis-à-vis the frame element (107) comprise exclusively studs (143, 148) adapted to be received in a curved lug (144, 149) on the said frame element (107).

14. Unit according to any one of claims 10 to 12, **characterised in that** the said means of rotational immobilisation vis-à-vis the frame element (107) comprise at least one screw (134; 151).

15. Unit according to any one of claims 10 to 14, **characterised in that** the said connecting piece (106) has, in the said crescent-shaped space existing between the said pinion (104) and the said ring (114), at least one conduit (31) for the passage of electric cables.

16. Unit according to any one of claims 10 to 15, **characterised in that** the said pinion (104) is adapted to be fixed to a column (105), the end part of which has, on the outside, as from its edge, a fluted zone (21) and then a frustoconical axial stop surface (22).

17. Unit according to any one of claims 10 to 16, **characterised in that** the said connecting piece (106) comprises two tubular parts (125, 126), centred respectively on the rotation axis (124) of the pinion (104) and on the rotation axis (115) of the ring (114), and a transversely oriented wall (127) connects the said two parts (125, 126).

18. Unit according to any one of claims 10 to 17, **characterised in that** the said steering wheel (102) comprises a rim (109), a hub (111) and arms (110) connecting the said hub and the said rim, the said hub (111) comprising a central part constituting the said ring (114).

19. Unit according to claim 18, **characterised in that** the said ring (114) has, in radial section, an L shape.

20. Unit according to either one of claims 18 or 19, **characterised in that** the said steering wheel comprises a hub (111) having a groove (19) around the said ring (14; 114).

## Patentansprüche

1. Verfahren für die Montage eines Fahrzeug-Lenksystems mit einem einen festen Träger (103) umgebenden Lenkrad, wobei das System ein Ritzel (104) mit Außenzahnung, das zu einer Lenksäule (105) koaxial ist, und eine Einfassung (114) mit Innenzahnung, die mit dem Ritzel (104) in Eingriff ist, aufweist, wobei die Einfassung (114) mit dem Lenkrad (102) fest verbunden ist, wobei die Drehachse (115) des Kranzes in Bezug auf die Drehachse (124) des Ritzels versetzt ist, derart, dass zwischen dem Ritzel und der Einfassung ein sichelförmiger Zwischenraum vorhanden ist, der den Durchgang von Verbindungsmitteln (106, 134) zwischen dem festen Träger (103) und einem Rahmenelement (107), das sich außerhalb der Säule (105) befindet, ermöglicht; wobei das Verfahren **dadurch gekennzeichnet ist, dass** es umfasst:
- den Schritt des Lieferns einer Baugruppe in Form einer vormontierten Einheit, die an der Säule (105) und an dem Rahmenelement (107) angeordnet werden kann, wobei die vormontierte Einheit das mit der Einfassung (114) versehene Lenkrad (102), den festen Träger (103), das mit der Säule (105) fest verbindbare Ritzel (104), einen festen Ansatz (106), der mit Mitteln (143, 134; 143, 148; 150) für eine Unbeweglichmachung in Bezug auf das Rahmenelement (107) versehen ist, Mittel (141) für die drehbare Anbringung, die zwischen dem Ansatz (106) und dem Lenkrad (102) vorgesehen sind, und Festpressmittel (134), die zwischen dem Ansatz (106) und dem festen Träger (103) vorgesehen sind, umfasst; und
- die Schritte des Herstellens eines Eingriffs zwischen dem Ritzel (104) der vormontierten Einheit und der Säule (105), des Herstellens eines Eingriffs zwischen den Mitteln (143, 134; 143, 148; 150) für die drehfeste Anbringung des Ansatzes (106) und dem Rahmenelement (107) und des Festziehens einer Schraube (133) für die Verriegelung des Ritzels (104) an der Säule (105).

2. Verfahren nach Anspruch 1, **dadurch gekennzeichnet, dass** es den Schritt umfasst, bei dem Mittel (140) zur drehbaren Anbringung zwischen dem Ritzel (104) und dem Ansatz (106) in der vormontierten Einheit vorgesehen werden.

3. Verfahren nach einem der Ansprüche 1 oder 2, **dadurch gekennzeichnet, dass** es den Schritt umfasst, bei dem vorgesehen wird, dass die Mittel zur drehfesten Anbringung in Bezug auf das Rahmenelement (107) wenigstens einen Höcker (143, 148) umfassen, der in einem zurückgebogenen Haken (144, 149) des Rahmenelements (107) aufgenommen werden kann.

4. Verfahren nach Anspruch 3, **dadurch gekennzeichnet, dass** es den Schritt umfasst, bei dem vorgesehen wird, dass die Mittel zur drehfesten Anbringung in Bezug auf das Rahmenelement (107) ausschließlich Höcker (143, 148) umfassen, die so beschaffen sind, dass sie in einem zurückgebogenen Haken (144, 149) des Rahmenelements (107) aufgenommen werden können.

5. Verfahren nach einem der Ansprüche 1 bis 3, **dadurch gekennzeichnet, dass** es den Schritt umfasst, bei dem vorgesehen wird, dass die Mittel zur drehfesten Anbringung in Bezug auf das Rahmenelement (107) wenigstens eine Schraube (134; 151) umfassen.

6. Verfahren nach einem der Ansprüche 1 bis 5, **dadurch gekennzeichnet, dass** es den Schritt umfasst, bei dem vorgesehen wird, dass der Ansatz (106) in dem sichelförmigen Raum zwischen dem Ritzel (104) und der Einfassung (114) wenigstens eine Röhre (31) für den Durchgang von Elektrokabeln aufweist.

7. Verfahren nach einem der Ansprüche 1 bis 6, **dadurch gekennzeichnet, dass** es den Schritt umfasst, bei dem vorgesehen wird, dass das Rahmenelement die röhrenförmige Hülle (7; 107) ist, die der drehbaren Anbringung der Säule (5; 105) dient.

8. Verfahren nach einem der Ansprüche 1 bis 7, **dadurch gekennzeichnet, dass** es den Schritt umfasst, bei dem vorgesehen wird, dass das Ritzel (104) mit einer Säule (105) fest verbunden werden kann, dessen Endabschnitt auf der Außenseite beginnend bei seiner Schnittfläche eine geriffelte Zone (21) und dann eine kegelstumpfförmige axiale Anschlagoberfläche (22) aufweist.

9. Verfahren nach einem der Ansprüche 1 bis 8, **dadurch gekennzeichnet, dass** es den Schritt umfasst, bei dem vorgesehen wird, dass der Ansatz (106) zwei röhrenförmige Teile (125, 126), die auf die Drehachse (124) des Ritzels (104) bzw. auf die Drehachse (115) der Einfassung (114) zentriert sind, und eine Wand (127), die quer orientiert ist und die zwei Teile (125, 126) miteinander verbindet, aufweist.

10. Vormontierte Lenkeinheit für Fahrzeuge, die für die Ausführung des Verfahrens nach einem der Ansprüche 1 bis 9 geeignet ist, **dadurch gekennzeichnet, dass** sie umfasst:
- einen festen Träger (103);
- ein Lenkrad (102), das den festen Träger (103) umgibt;
- ein Ritzel (104) mit Außenzahnung, das dazu bestimmt ist, mit einer Lenksäule (105) koaxial fest verbunden zu werden;
- eine Einfassung (114) mit Innenzahnung, die dazu vorgesehen ist, mit dem Ritzel (104) in Eingriff zu gelangen, wobei die Einfassung (114) mit dem Lenkrad (102) fest verbunden ist, wobei die Drehachse (115) der Einfassung in Bezug auf die Drehachse (124) des Ritzels versetzt ist, derart, dass zwischen dem Ritzel und der Einfassung ein sichelförmiger Raum vorhanden ist;
- Befestigungsmittel (106, 134) zwischen dem festen Träger (103) und einem außerhalb der Säule (105) befindlichen Rahmenelement (107), wobei der sichelförmige Raum den Durchgang der Befestigungsmittel zulässt;
- einen festen Ansatz (106), der mit Mitteln (143, 134; 143, 148; 150) zur drehfesten Anbringung in Bezug auf das Rahmenelement (107) versehen ist; und
- Mittel (141) zur drehbaren Anbringung, die zwischen dem Ansatz (106) und dem Lenkrad (102) vorgesehen sind.

11. Einheit nach Anspruch 10, **dadurch gekennzeichnet, dass** die Drehmontagemittel (140) zwischen dem Ritzel (104) und dem Ansatz (106) vorgesehen sind.

12. Einheit nach einem der Ansprüche 10 oder 11, **dadurch gekennzeichnet, dass** die Mittel zur drehfesten Anbringung in Bezug auf das Rahmenelement (107) wenigstens einen Höcker (143, 148) aufweisen, der in einem zurückgebogenen Haken (144, 149) des Rahmenelements (107) aufgenommen werden kann.

13. Einheit nach Anspruch 12, **dadurch gekennzeichnet, dass** die Mittel zur drehfesten Anbringung in Bezug auf das Rahmenelement (107) ausschließlich Höcker (143, 148) aufweisen, die in einem zurückgebogenen Haken (144, 149) des Rahmenelements (107) aufgenommen werden können.

14. Einheit nach einem der Ansprüche 10 bis 12, **dadurch gekennzeichnet, dass** die Mittel zur drehfesten Anbringung in Bezug auf das Rahmenelement (107) wenigstens eine Schraube (134; 151) umfassen.

15. Einheit nach einem der Ansprüche 10 bis 14, **dadurch gekennzeichnet, dass** der Ansatz (106) in dem sichelförmigen Raum zwischen dem Ritzel (104) und der Einfassung (114) wenigstens eine Röhre (31) für den Durchgang von Elektrokabeln aufweist.

16. Einheit nach einem der Ansprüche 10 bis 15, **dadurch gekennzeichnet, dass** das Ritzel (104) mit einer Säule (105) fest verbunden werden kann, dessen Endabschnitt an der Außenseite beginnend bei seiner Schnittfläche eine geriffelte Zone (21) und dann eine kegelstumpfförmige axiale Anschlagfläche (22) aufweist.

17. Einheit nach einem der Ansprüche 10 bis 16, **dadurch gekennzeichnet, dass** der Ansatz (106) zwei röhrenförmige Teile (125, 126), die auf die Drehachse (124) des Ritzels (104) bzw. auf die Drehachse (115) der Einfassung (114) zentriert sind, und eine Wand (127), die quer orientiert ist und die beiden Teile (125, 126) miteinander verbindet, aufweist.

18. Einheit nach einem der Ansprüche 10 bis 17, **dadurch gekennzeichnet, dass** das Lenkrad (102) einen Kranz (109), eine Nabe (111) und Speichen (110), die die Nabe mit dem Kranz verbinden, umfasst, wobei die Nabe (111) einen den Kranz (114) bildenden Mittelteil umfasst.

19. Einheit nach Anspruch 18, **dadurch gekennzeichnet, dass** die Einfassung (114) im radialen Schnitt L-förmig ist.

20. Einheit nach einem der Ansprüche 18 oder 19, **dadurch gekennzeichnet, dass** das Lenkrad eine Nabe (111) aufweist, die eine um die Einfassung (14; 114) verlaufende Kehle (19) aufweist.
